# EUROPEAN PATENT APPLICATION

(11) **EP 4 593 170 A1**
(43) Date of publication of application: **30.07.2025**
(21) Application number: 23901101.8
(22) Date of filing: 06.12.2023
(51) Int. Cl.: H01M 50/131, H01M 50/126, H01M 50/121, H01M 50/178, H01M 50/105

(54) **POUCH FILM LAMINATE AND SECONDARY BATTERY**

(30) Priority: 06.12.2022 KR 20220169204
(71) Applicant: LG Energy Solution, Ltd., Seoul 07335 (KR)
(72) Inventor: SONG, Dae Woong, Daejeon 34122 (KR); HWANG, Soo Ji, Daejeon 34122 (KR); YU, Hyung Kyun, Daejeon 34122 (KR); KANG, Min Hyeong, Daejeon 34122 (KR); SHIN, Ji Hyun, Daejeon 34122 (KR); KIM, Gi Woung, Daejeon 34122 (KR)
(74) Representative: Plasseraud IP
(86) International application number: PCT/KR2023/020013
(87) International publication number: WO 2024/123083

(57) **Abstract**

The present invention relates to a pouch film laminate and a secondary battery including a pouch-type battery case manufactured using the pouch film laminate. The pouch-type film laminate according to the present invention includes a substrate layer, a gas barrier layer, and a sealant layer which are sequentially laminated, wherein the sealant layer has a melt viscosity of 1,000 Pa·s to 3,500 Pa·s as measured at 190 °C.

## Description

### TECHNICAL FIELD

The present invention relates to a pouch film laminate and a pouch-type secondary battery manufactured by molding the pouch film laminate.

### BACKGROUND ART

Secondary batteries are not only used in small products such as digital cameras, P-DVDs, MP3Ps, mobile phones, PDAs, portable game devices, power tools, and E-bikes, but are also used in large products requiring high output, such as electric vehicles and hybrid vehicles, and a power storage device and a power storage device for backup which store surplus generated power or renewable energy. Types of secondary batteries include a nickel cadmium battery, a nickel hydride battery, a lithium ion battery, a lithium ion polymer battery, and the like.

The secondary battery may be manufactured by accommodating, in a battery case, an electrode assembly in which a positive electrode, a negative electrode, and a separator interposed therebetween are alternately stacked, injecting an electrolyte into the battery case, and then sealing the battery case. Secondary batteries are classified into a pouch-type battery, a can-type battery, and the like according to a material of the case accommodating the electrode assembly.

The pouch-type secondary battery may be manufactured by performing press processing on a flexible pouch film laminate to form a cup part, and then accommodating an electrode assembly in an inner accommodation space of the cup part and sealing a sealing part. The pouch film laminate is formed of a plurality of layers in which a polymer film such as polyethylene terephthalate is laminated on one surface of a metal gas barrier layer and a sealant layer, in which a thermoplastic polyolefin-based resin is used, is laminated on the other surface thereof. When the pouch-type battery case is sealed, the sealant layers are thermally bonded to each other, thereby forming a sealing part.

In recent years, as the capacity of a pouch-type secondary battery is increased, the demand for a pouch having excellent formability is increasing. Accordingly, attempts are being made to improve pouch formability by increasing the thickness of the gas barrier layer. However, when the gas barrier layer is formed to be thick, sufficient insulation may be unable to secured by a conventional sealant layer configuration, and as the overall thickness of the pouch increases, the sealant layer is not easily melted during sealing, resulting in poor sealing quality.

### DISCLOSURE OF THE INVENTION

### TECHNICAL PROBLEM

An aspect of the present invention provides a pouch-type battery including a pouch film laminate having excellent sealing quality including a sealant layer having a specific melt viscosity at 190 °C, and a battery case formed using the pouch film laminate.

### TECHNICAL SOLUTION

According to an aspect of the present invention, there is provided a pouch film laminate including a substrate layer, a gas barrier layer, and a sealant layer which are sequentially laminated, wherein the sealant layer has a melt viscosity of 1,000 Pa·s to 3,500 Pa·s as measured at 190 °C.

The sealant layer may have a melt viscosity of 1,400 Pa·s to 4,500 Pa·s as measured at 170 °C, and the sealant layer may have a melt viscosity of 500 Pa·s to 2,500 Pa·s as measured at 210 °C.

The sealant layer may have a melt flow rate (MFR) of 1 g/10min to 15 g/10min, 1.5 g/10min to 15 g/10min, or 5 g/10min to 15 g/10min as measured under the conditions of a temperature of 230 °C and a load of 2.16 kg.

The thickness of the sealant layer may be 30 µm to 130 µm, the thickness of the gas barrier layer may be 40 µm to 100 µm, and the thickness of the substrate layer may be 5 µm to 100 µm.

In addition, the substrate layer may include a first substrate layer and a second substrate layer disposed between the first substrate layer and the gas barrier layer, and the second substrate layer may include nylon. In this case, the second substrate layer may include nylon 6.

According to another aspect of the present invention, there is provided a pouch-type secondary battery including a pouch-type battery case in which an electrode assembly is accommodated, wherein the pouch-type battery case includes a pouch film laminate, the pouch film laminate includes a substrate layer, a gas barrier layer, and a sealant layer which are sequentially laminated, and the sealant layer has a melt viscosity of 1,000 Pa·s to 3,500 Pa·s as measured at 190 °C.

When the pouch-type battery case is sealed for 1.6 seconds at 210 °C and 1.2 MPa, the thickness of the sealant layer of a sealing part formed in the pouch-type battery case may be 54% to 86% relative to the thickness of the sealant layer of the pouch film laminate.

### ADVANTAGEOUS EFFECTS

The pouch film laminate according to the present invention includes a sealant layer having a melt viscosity at 190 °C of 1,000 Pa·s to 3,500 Pa·s. When the melt viscosity at 190 °C of the sealant layer satisfies the above range, the flow characteristics of the sealant layer is improved near the sealing temperature to seal the sealing part in a desired thickness range within a predetermined production time, and the sealing strength of the pouch may be improved by performing sufficient sealing between the sealant layers. When the pouch-type battery case manufactured using the pouch film laminate according to the present invention is applied to a secondary battery, the safety is excellent since a vent phenomenon caused by a decrease in sealing strength and deterioration in insulating properties caused by a decrease in the thickness of the sealing part are prevented.

### BRIEF DESCRIPTION OF THE DRAWINGS

The drawings attached to the specification illustrate preferred examples of the present invention by example, and serve to enable technical concepts of the present invention to be further understood together with detailed description of the invention given below, and therefore the present invention should not be interpreted only with matters in such drawings.

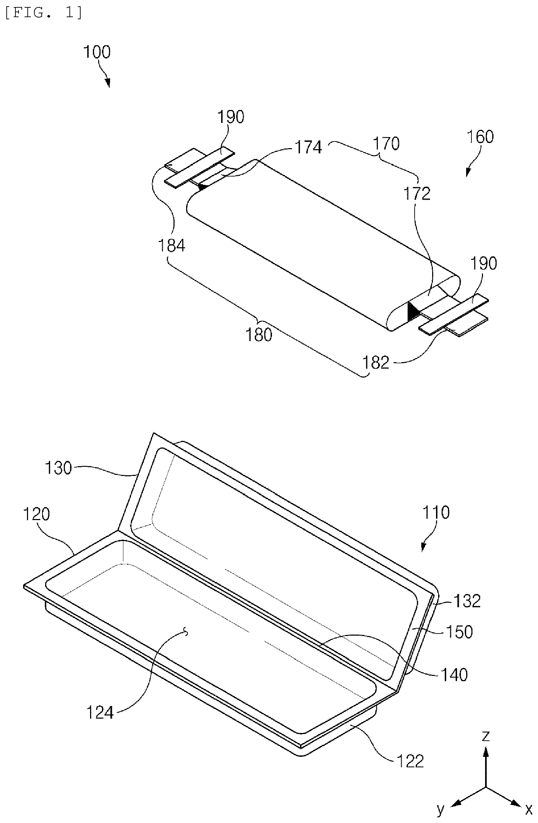

FIG. 1 is an exploded assembly view illustrating a pouch-type secondary battery according to the present invention.

### BEST MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. Also, unless defined clearly and apparently in the description, the terms as defined in a commonly used dictionary are not ideally or excessively construed as having formal meaning.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In the present specification, when a part is referred to "include" an element, the part does not exclude other elements but may further include other elements unless otherwise indicated.

In the present specification, "A and/or B" means A, or B, or A and B.

In the present specification, the expression "%" denotes wt% unless explicitly stated otherwise.

### Pouch Film Laminate

The pouch film laminate according to the present invention includes a substrate layer, a gas barrier layer, and a sealant layer which are sequentially laminated, wherein the sealant layer has a melt viscosity of 1,000 Pa·s to 3,500 Pa·s as measured at 190 °C.

Hereinafter, each configuration of the pouch film laminate of the present invention will be described in more detail.

### (1) Substrate Layer

The substrate layer is formed on the outermost layer of the pouch film laminate to protect the secondary battery from friction and collision with the outside. The substrate layer may be made of a polymer to electrically insulate an electrode assembly from the outside.

The substrate layer may be made of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the substrate layer may be made of polyethylene terephthalate (PET), nylon, or a combination thereof having abrasion resistance and heat resistance.

The thickness of the substrate layer may be 5 µm to 100 µm, specifically 7 µm to 70 µm, and more specifically 25 µm to 60 µm. When the thickness of the substrate layer satisfies the above range, the external insulation property is excellent and the entire pouch is not thick, and thus the energy density of the secondary battery may be excellent.

The substrate layer may have a single film structure made of any one material. Alternatively, the substrate layer may have a composite film structure in which two or more materials are each formed as a layer. In the composite film structure, an adhesive layer may be additionally formed between each layer.

Specifically, the substrate layer may include a first substrate layer and a second substrate layer. For example, the substrate layer may include a first substrate layer disposed on the outermost surface of the pouch film laminate and a second substrate layer disposed between the first substrate layer and the gas barrier layer. The first substrate layer may include at least one among polyester-based films such as polyethylene terephthalate and polybutylene terephthalate, but is not limited thereto. The second substrate layer may include at least one among polyamide-based films such as nylon 6, nylon 6,6, nylon MXD6, and nylon 4,10, but is not limited thereto. Preferably, the second substrate layer may include nylon 6, and in this case, there is an advantage of improving the formability of the pouch due to excellent stretching characteristics of nylon 6.

### (2) Gas Barrier Layer

The gas barrier layer is laminated between the substrate layer and the sealant layer to secure the mechanical strength of the pouch, to block the entry of gas, moisture, or the like from the outside of the secondary battery, and to prevent electrolyte leakage from the inside of the pouch-type battery case.

The gas barrier layer may be formed of a metal. For example, the gas barrier layer may be a metal thin film including one or more metals selected from the group consisting of aluminum (Al), copper (Cu), stainless steel (SUS), nickel, titanium, and INVAR^{®} (Fe-Ni alloy), but is not limited thereto.

According to an embodiment of the present invention, the gas barrier layer may be formed of an aluminum alloy thin film. When the gas barrier layer is formed by using the aluminum alloy thin film, the gas barrier layer may ensure a mechanical strength of at least a predetermined level, also be light, and ensure heat-dissipating properties, complement to electrochemical properties, and the like due to the electrode assembly and the electrolyte. The aluminum alloy thin film may include a metal element, in addition to the aluminum (Al), for example, at least one selected from the group consisting of iron (Fe), copper (Cu), chromium (Cr), manganese (Mn), nickel (Ni), magnesium (Mg), silicon (Si), and zinc (Zn).

The thickness of the gas barrier layer may be 40 µm to 100 µm, specifically 50 µm to 90 µm, and more specifically 55 µm to 85 µm. When the thickness of the gas barrier layer satisfies the above range, the formability and gas barrier performance when the cup part is formed are excellent.

### (3) Sealant Layer

The function of the sealant layers is to completely seal the inside of the pouch-type battery case from the outside. When the pouch-type battery case accommodating the electrode assembly therein is sealed, the sealant layers are thermally bonded to each other in a sealing part. To this end, the sealant layers may be formed of a material having excellent thermal bonding strength.

The sealant layers may be formed of a material having insulation, corrosion resistance, and sealing properties. Specifically, since the sealant layers are in direct contact with the electrode assembly and/or the electrolyte inside the pouch-type battery case, the sealant layer may be formed of a material having insulation and corrosion resistance. In addition, since the sealant layer has to completely seal the inside of the pouch-type battery case to block material movement between the inside and the outside, the sealant layer may be formed of a material having high sealing properties (e.g., excellent thermal bonding strength). In order to secure such insulation, corrosion resistance, and sealing properties, the sealant layer may be formed of a polymer material.

Meanwhile, when the gas barrier layer is formed to be thick in order to manufacture a pouch having good formability, there is a limitation in that the sealant layer is not easily melted when the pouch-type battery case is sealed. To solve this limitation, when the sealing temperature is increased to 220 °C or higher, there is a limitation that the substrate layer is melted and deformed.

As a result of a significant amount of repeated conducted researches for solving such a limitation, the present inventors have found that the melt viscosity of the sealant layer of the pouch film laminate is controlled within a specific numerical range so that thermal bonding between the sealant layers is smoothly performed and the sealing strength of the pouch may be improved, and the sealing part may be sealed in a desired thickness range within a predetermined production time, thereby completing the present invention.

In the present invention, the melt viscosity of the sealant layer measured at 190 °C may be 1,000 Pa·s to 3,500 Pa·s, specifically 1,000 Pa·s to 3,000 Pa·s, and more specifically 1,200 Pa·s to 3,000 Pa·s. When the melt viscosity of the sealant layer measured at 190 °C is less than 1,000 Pa·s, there is a limitation in that the sealant layer is excessively melted during sealing the pouch, thereby reducing the residual thickness of the sealant layer included in the sealing part and breaking the insulation. When the melt viscosity of the sealant layer measured at 190 °C is greater than 3,500 Pa·s, there is a limitation in that the sealant layer is not sufficiently melted during sealing the pouch, and thus, sealing through thermal bonding between the sealant layers is not sufficiently performed, thereby reducing sealing strength.

The melt viscosity of the sealant layer measured at 170 °C may be 1,400 Pa·s to 4,500 Pa·s, specifically 1,400 Pa·s to 4,000 Pa·s, and more specifically 1,800 Pa·s to 4,000 Pa·s. When the melt viscosity of the sealant layer measured at 170 °C satisfies the above numerical range, the sealing part may be sealed in a desired thickness range within a predetermined production time.

The melt viscosity of the sealant layer measured at 210 °C may be 500 Pa·s to 2,500 Pa·s, specifically 800 Pa·s to 2,500 Pa·s, and more specifically 800 Pa·s to 2,000 Pa·s. When the melt viscosity of the sealant layer measured at 210 °C satisfies the above numerical range, the sealing part may be sealed in a desired thickness range within a predetermined production time.

The melt viscosity of the sealant layer may vary with the type and physical properties of the material constituting the sealant layer. For example, if the sealant layer is formed using the polyolefin-based copolymer, the melt viscosity may vary with the type and content of unit monomers constituting the copolymer, the weight average molecular weight of the copolymer, and the like.

Meanwhile, in the present invention, the melt flow rate (MFR) of the sealant layer measured under the conditions of a temperature of 230 °C and a load of 2.16 kg may be 1 g/10min to 15 g/10min, 1.5 g/10min to 15 g/10min, 5 g/10min to 15 g/10min, 6 g/10min to 15 g/10min, or 6 g/10min to 14 g/10min. When the melt flow rate of the sealant layer satisfies the numerical range, the sealing part may be sealed in a desired thickness range within a predetermined production time.

Meanwhile, the thickness of the sealant layer may be 30 µm to 130 µm, specifically 50 µm to 120 µm, and more specifically 70 µm to 100 µm. When the thickness of the sealant layer satisfies the above range, there is an effect of securing the formability of the pouch film laminate while securing the sealing strength of the sealing part.

Preferably, the thickness of the sealant layer may be greater than or equal to the thickness of the gas barrier layer. Specifically, the thickness of the sealant layer may be 1 to 1.5 times, 1.1 to 1.5 times, or 1.2 to 1.5 times the thickness of the gas barrier layer. This is because if the thickness of the sealant layer is thinner than that of the gas barrier layer, the insulation may be deteriorated.

Meanwhile, the sealant layer may include a polyolefin-based resin such as polyethylene, polypropylene, polybutylene, or a copolymer thereof, a polycarbonate-based resin, a polyethylene terephthalate-based resin, a polyvinyl chloride-based resin, an acrylic polymer, a polyacrylonitrile-based resin, a polyimide-based resin, a polyamide-based resin, a cellulose-based resin, an aramid-based resin, a nylon-based resin, a polyester-based resin, polyparaphenylene benzobisoxazole, a polyarylate-based resin, teflon, a glass fiber, or a mixture thereof, and preferably, may be made of a polyolefin-based resin. More preferably, the sealant layer may be composed of cast polypropylene (CPP), acid modified polypropylene (PPa), a polypropylene-ethylene copolymer, and/or a polypropylene-butylene-ethylene terpolymer.

Meanwhile, the sealant layer according to the present invention may have a single film structure made of any one material. Alternatively, the sealant layer may have a composite film structure formed by forming layers of two or more materials, respectively. Specifically, the sealant layer may include a first sealant layer and a second sealant layer. In this case, the first sealant layer may be a layer disposed adjacent to the gas barrier layer, and the second sealant layer may be a layer disposed on the first sealant layer. The first sealant layer and the second sealant layer may be made of materials having different quality and physical properties. An interface may exist between the first sealant layer and the second sealant layer. This means that the first sealant layer and the second sealant layer are different layers, and may be formed separately.

The first sealant layer may be made of an acid-modified polypropylene (PPa) in order to secure long-term adhesion performance between the gas barrier layer and the first sealant layer. Here, the acid-modified polypropylene may be maleic anhydride polypropylene (MAHPP).

The second sealant layer may be formed of a material having insulation, corrosion resistance, and sealing properties. Specifically, since the second sealant layer is in direct contact with the electrode assembly (160 of FIG. 1) and/or the electrolyte inside the accommodation space (124 of FIG. 1), the second sealant layer may be formed of a material having insulation and corrosion resistance. In addition, since the second sealant layer is required to completely seal the inside of the battery case to block material movement between the inside and the outside, the second sealant layer may be formed of a material having high sealing properties. In order to secure such insulation, corrosion resistance, and sealing properties, the second sealant layer may include a polyolefin-based resin such as polyethylene, polypropylene, polybutylene, or a copolymer thereof, a polycarbonate-based resin, a polyethylene terephthalate-based resin, a polyvinyl chloride-based resin, an acrylic polymer, a polyacrylonitrile-based resin, a polyimide-based resin, a polyamide-based resin, a cellulose-based resin, an aramid-based resin, a nylon-based resin, a polyester-based resin, polyparaphenylene benzobisoxazole, a polyarylate-based resin, teflon, a glass fiber, or a mixture thereof, and preferably, may be made of a polyolefin-based resin. More preferably, the second sealant layer may be composed of cast polypropylene (CPP), acid modified polypropylene (PPa), a polypropylene-ethylene copolymer, and/or a polypropylene-butylene-ethylene terpolymer.

### Pouch-type Secondary Battery

Next, a pouch-type secondary battery according to the present invention will be described.

The pouch-type secondary battery according to the present invention includes a pouch-type battery case in which an electrode assembly is accommodated, wherein the pouch-type battery case includes a pouch film laminate, the pouch film laminate includes a substrate layer, a gas barrier layer, and a sealant layer which are sequentially laminated, and the sealant layer has a melt viscosity of 1,000 Pa·s to 3,500 Pa·s as measured at 190 °C.

Hereinafter, each component of the pouch-type secondary battery of the present invention will be described in more detail with reference to the drawings.

FIG. 1 is an exploded assembly view illustrating a pouch-type secondary battery 100 according to the present invention. As shown in FIG. 1, the pouch-type secondary battery 100 according to the present invention may include a pouch-type battery case 110, an electrode assembly 160, an electrode lead 180, an insulating part 190, and an electrolyte (not shown).

### (1) Pouch-type Battery Case

The pouch-type battery case 110 may accommodate an electrode assembly 160 therein. The pouch-type battery case 110 may be manufactured by molding the pouch film laminate of the present invention described above. The detailed configuration and physical properties of the pouch film laminate are the same as described above, and thus a detailed description thereof will be omitted.

The pouch film laminate may be drawn and stretched by a punch or the like to manufacture the pouch-type battery case 110. As a result, the pouch-type battery case 110 may include a cup part 122 and an accommodation part 124. The accommodation part 124 is a place for accommodating the electrode assembly, and may mean an accommodation space formed in a pocket shape inside the cup part 122 as the cup part 122 is formed.

According to an embodiment of the present invention, the pouch-type battery case 110 may include a first case 120 and a second case 130 as illustrated in FIG. 1. The first case 120 may include the accommodation part 124 capable of accommodating the electrode assembly 160, and the second case 130 may cover the accommodation part 124 from above so that the electrode assembly 160 does not deviate from the battery case 110. As illustrated in FIG. 1, the first case 120 and the second case 130 may be manufactured by connecting one side thereof to each other, but are not limited thereto, and may be manufactured in various ways, such as being separately manufactured.

According to another embodiment of the present invention, when a cup part is formed on a pouch film laminate, two cup parts 122 and 132 that are symmetrical to one pouch film laminate may be drawn to be adjacent to each other. In this case, cup parts 122 and 132 may be formed in the first case 120 and the second case 130, respectively, as illustrated in FIG. 1. After the electrode assembly 160 is accommodated in the accommodation part 124 provided in the cup part 122 of the first case 120, the bridge portion 140 formed between the two cup parts 122 and 132 may be folded so that the two cup parts 122 and 132 face each other. In this case, the cup part 132 of the second case 130 may accommodate the electrode assembly 160 from above. Accordingly, since the two cup parts 122 and 132 accommodate one electrode assembly 160, the electrode assembly 160 having a greater thickness than that accommodated in one cup part 122 may be accommodated. In addition, since one edge of the secondary battery 100 is formed by folding the pouch-type battery case 110, the number of edges to be sealed may be reduced when a sealing process is subsequently performed. Accordingly, the process speed of the pouch-type secondary battery 100 may be improved, and the number of sealing processes may be reduced.

The pouch-type battery case 110 may be sealed in a state in which the electrode assembly 160 is accommodated so that a portion of the electrode lead 180, that is, a terminal part thereof, which will be described below, is exposed. Specifically, when the electrode lead 180 is connected to the electrode tab 170 of the electrode assembly 160 and the insulating part 190 is formed at a portion of the electrode lead 180, the electrode assembly 160 may be accommodated in the accommodation part 124 provided in the cup part 122 of the first case 120, and the second case 130 may cover the accommodation part 124 from above. Then, an electrolyte may be injected into the accommodation part 124, and the sealing part 150 formed at the edges of the first case 120 and the second case 130 may be sealed.

The sealing part 150 may serve to seal the accommodation part 124. Specifically, the sealing part 150 may be formed along the edge of the accommodation part 124 to seal the accommodation part 124. The sealing temperature of the sealing part 150 may be in a range of 180 °C to 250 °C, specifically 200 °C to 250 °C, and more specifically 210 °C to 240 °C. When the sealing temperature satisfies the above numerical range, the pouch-type battery case 110 may secure sufficient sealing strength by thermal bonding.

According to the present invention, when the sealant layers of the first case 120 and the second case 130 are stacked to contact each other and then sealed for 1.6 seconds at 210 °C and 1.2 MPa, the thickness of the sealant layer of the sealing part 150 formed in the pouch-type battery case 110 may be 54% to 86%, specifically 55% to 85%, more specifically 60% to 85% relative to the thickness of the sealant layer of the pouch film laminate. When the thickness of the sealant layer of the sealing part 150 relative to the thickness of the sealant layer of the pouch film laminate satisfies the above numerical range, sufficient sealing strength may be secured and the insulation characteristics may be maintained.

### (2) Electrode Assembly

The electrode assembly 160 may be inserted into the pouch-type battery case 110 and sealed by the pouch-type battery case 110 after the electrolyte is injected thereinto.

The electrode assembly 160 may be formed by sequentially stacking a positive electrode, a separator, and a negative electrode. Specifically, the electrode assembly 160 may include two kinds of electrodes, which are a positive electrode and a negative electrode, and a separator interposed between the electrodes to insulate the electrodes from each other.

The positive electrode and the negative electrode may each have a structure in which an active material slurry is applied to an electrode current collector in the form of a metal foil or metal mesh including aluminum and copper. The slurry may be typically formed by stirring a granular active material, an auxiliary conductor, a binder, a conductive agent, and the like while a solvent is added. The solvent may be removed in a subsequent process.

The slurry obtained by mixing an electrode active material, a binder, and/or a conductive agent is applied onto a positive electrode current collector and a negative electrode current collector to manufacture a positive electrode and a negative electrode, and the positive electrode and the negative electrode are respectively stacked on both sides of a separator, thereby manufacturing the electrode assembly 160 in a predetermined shape. The type of the electrode assembly 160 may be a stacked type, a jelly-roll type, a stacked and folded type, or the like, but is not limited thereto.

The electrode assembly 160 may include an electrode tab 170.

The electrode tab 170 may be connected to the positive electrode and the negative electrode of the electrode assembly 160, respectively, may protrude from the electrode assembly 160 to the outside, and may be a path through which electrons may move between the inside and the outside of the electrode assembly 160. The electrode current collector included in the electrode assembly 160 may consist of a part to which the electrode active material is applied and an end part to which the electrode active material is not applied, that is, an uncoated part. The electrode tab 170 may be formed by cutting the uncoated part or by connecting a separate conductive member to the uncoated part through ultrasonic welding or the like. As illustrated in FIG. 1, the electrode tab 170 may protrude in different directions of the electrode assembly 160, but are not limited thereto, and may protrude in various directions, such as protruding in parallel from one side in the same direction.

### (3) Electrode Lead

An electrode lead 180 may supply electricity to the outside of the secondary battery 100. The electrode lead 180 may be connected to the electrode tab 170 of the electrode assembly 160 through spot welding or the like.

The electrode lead 180 may be connected to the electrode assembly 160 and may protrude to the outside of the pouch-type battery case 110 via the sealing part 150. Specifically, one end of the electrode lead 180 may be connected to the electrode assembly 160, in particular, the electrode tab 170, and the other end of the electrode lead 180 may protrude to the outside of the pouch-type battery case 110.

The electrode lead 180 may include a positive electrode lead 182 having one end connected to the positive electrode tab 172 and extending in a direction in which the positive electrode tab 172 protrudes, and a negative electrode lead 184 having one end connected to the negative electrode tab 174 and extending in a direction in which the negative electrode tab 174 protrudes. Both the positive electrode lead 182 and the negative electrode lead 184 may have the other ends protruding outside the battery case 110. Therefore, electricity generated inside the electrode assembly 160 may be supplied to the outside. In addition, since each of the positive electrode tab 172 and the negative electrode tab 174 is formed to protrude in various directions, each of the positive electrode lead 182 and the negative electrode lead 184 may also extend in various directions. Materials of the positive electrode lead 182 and the negative electrode lead 184 may be different from each other. That is, the positive electrode lead 182 may be made of the same aluminum (Al) material as the positive electrode current collector, and the negative electrode lead 184 may be made of the same copper (Cu) material as the negative electrode current collector or a copper material coated with nickel (Ni). A portion of the electrode lead 180 protruding to the outside of the battery case 110 may become a terminal part and may be electrically connected to an external terminal.

### (4) Insulating Part

The insulating part 190 prevents electricity generated from the electrode assembly 160 from flowing to the battery case 110 through the electrode lead 180, and may maintain the sealing of the battery case 110. To this end, the insulating part 190 may be formed of a nonconductor having non-conductivity that does not allow electricity to pass therethrough. In general, the insulating part 190 is easily attached to the electrode lead 180 and a relatively thin insulating tape or film is widely used as the insulating part, but the present invention is not limited thereto, and any member capable of insulating the electrode lead 180 may be used.

The insulating part 190 may be disposed to surround the outer circumferential surface of the electrode lead 180. Specifically, at least a portion of the electrode lead 180 may be surrounded by the insulating part 190. In this case, the insulating part 190 may be disposed between the electrode lead 180 and the pouch-type battery case 110. The insulating part 190 may be positioned to be limited to the sealing part 150 to which the first case 120 and the second case 130 of the pouch-type battery case 110 are thermally fused, and the electrode lead 180 may be attached to the battery case 110.

### (5) Electrolyte

The pouch-type secondary battery 100 according to the present invention may further include an electrolyte (not shown) injected into the pouch-type battery case 110. The electrolyte is for moving lithium ions generated by an electrochemical reaction of the electrode during charging/discharging the secondary battery 100, and may include a non-aqueous organic electrolyte which is a mixture of a lithium salt and an organic solvent, or a polymer using a polymer electrolyte. Furthermore, the electrolyte may include a sulfide-based, oxide-based, or polymer-based solid electrolyte, and the solid electrolyte may have flexibility that is easily deformed by an external force.

Meanwhile, when pressure is applied due to external force or gas generation, delamination may occur at an interface of the sealed battery case 110, the interface having relatively weak adhesion. For example, delamination may occur along the interface between the heat-bonded sealant layers. However, in the case of the battery case manufactured from the pouch film laminate of the present invention, since thermal adhesion between the sealant layers having improved flow characteristics during melting is smoothly performed, the adhesion on the interface is maintained high, thereby having excellent sealing strength.

### MODE FOR CARRYING OUT THE INVENTION

Hereinafter, the present invention will be described in more detail with reference to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Examples and Comparative Examples

### Example 1

### (1) Preparation of Pouch Film Laminate

A first adhesive film having a width of 266 mm, a length of 50 m, and a thickness of 3 µm, a nylon film having a width of 266 mm, a length of 50 m, and a thickness of 25 µm, a second adhesive film having a width of 266 mm, a length of 50 m, and a thickness of 3 µm, and a polyethylene terephthalate (PET) film having a width of 266 mm, a length of 50 m, and a thickness of 12 µm were sequentially laminated on one surface of an aluminum alloy thin film having a width of 266 mm, a length of 50 m, and a thickness of 60 µm. Next, a polypropylene-ethylene-butylene copolymer resin having a weight average molecular weight of 380,000 g/mol and containing propylene:ethylene:butylene at a weight ratio of 87:9:4 was extruded on the other surface of the aluminum alloy thin film to form a sealant layer having a width of 266 mm, a length of 50 m, and a thickness of 80 µm, thereby preparing a pouch film laminate.

### (2) Preparation of Pouch-Type Battery Case

The pouch film laminate prepared by the above method was cut into a width of 266 mm and a length of 200 mm, then folded in half in a size of 133 mm×200 mm so that the sealant layer comes into contact with each other, and then the end of the long side (200 mm) was sealed for 1.6 seconds under the condition of seal bar area of 200 mm×8 mm, 210 °C, and 1.2 MPa, thereby preparing a pouch-type battery case having a sealing part formed.

### Example 2

A pouch film laminate and a pouch-type battery case were prepared in the same manner as in Example 1, except that a sealant layer was formed using a polypropylene-ethylene-butylene copolymer resin having a weight average molecular weight of 360,000 g/mol and containing propylene:ethylene:butylene at a weight ratio of 92:7:1.

### Example 3

A pouch film laminate and a pouch-type battery case were prepared in the same manner as in Example 1, except that a sealant layer was formed using a polypropylene-ethylene-butylene copolymer resin having a weight average molecular weight of 330,000 g/mol and containing propylene: ethylene:butylene at a weight ratio of 79:11:10.

### Example 4

A pouch film laminate and a pouch-type battery case were prepared in the same manner as in Example 1, except that a sealant layer was formed using a polypropylene-ethylene copolymer resin having a weight average molecular weight of 440,000 g/mol and containing propylene: ethylene at a weight ratio of 97:3.

### Comparative Example 1

A pouch film laminate and a pouch-type battery case were prepared in the same manner as in Example 1, except that a sealant layer was formed using a polypropylene-ethylene-butylene copolymer resin having a weight average molecular weight of 430,000 g/mol and containing propylene:ethylene:butylene at a weight ratio of 94:4:2.

### Comparative Example 2

A pouch film laminate and a pouch-type battery case were prepared in the same manner as in Example 1, except that a sealant layer was formed using a polypropylene-ethylene-butylene copolymer resin having a weight average molecular weight of 310,000 g/mol and containing propylene:ethylene:butylene at a weight ratio of 91:3:6.

### Experimental Example 1: Evaluation of Melt Properties of Sealant Layer

Melt properties of the sealant layer included in the pouch film laminate prepared in each of Examples 1 to 4 and Comparative Examples 1 and 2 were measured.

Specifically, the pouch film laminate was cut into a size of 5 cm×30 cm, treated with 37 wt% of hydrochloric acid for 24 hours to remove the aluminum alloy thin film (gas barrier layer). The polymer film (sealant layer) containing polypropylene was separated, and then the pouch film laminate was dried in a vacuum oven for 24 hours.

Three dried specimens (3 g) were rolled into a columnar shape and put into MFR measuring equipment (MI-40, Gottfert GmbH), and melt flow rates (MFR) were measured under the conditions of a temperature of 230 °C and a load of 2.16 kg in a measurement section of 24.0-1.0 mm.

In addition, melt viscosity of the separated polymer film (sealant layer) was measured at three temperatures of 170 °C, 190 °C, and 210 °C in the Frequency sweep mode using rheometer (DHR-20, TA Instruments). In this case, geometry was measured in the range of 0.1-100 Hz under 0.1% strain using a 25 mm parallel plate, and then the value at the shear rate of 3.5 s⁻¹ was measured through Cox-Merz conversion.

The measurement results are shown in Table 1 below.

### Experimental Example 2: Measurement of Thickness Ratio of Sealant Layer of Sealing Part

By measuring the thickness of the sealant layer included in the sealing part of the pouch-type case prepared in each of Examples 1 to 4 and Comparative Examples 1 to 2, a ratio (%) of the thickness of the sealant layer of the sealing part to the thickness of the sealant layer of the pouch film laminate was calculated.

Specifically, the thickness of the sealant layer included in the sealing part was calculated by measuring the thickness of the sealing part formed in the pouch-type battery case at equal intervals of 9 point using a micrometer device and then subtracting the thicknesses of the substrate layer and the gas barrier layer from the average value.

Thereafter, in Examples 1 to 4 and Comparative Examples 1 to 2, the ratio (%) of the thickness of the sealant layer of the sealing part to the thickness of the sealant layer (80 µm) of the pouch film laminate was calculated, and the results are shown in Table 1 below.

### Experimental Example 3: Evaluation of Sealing Strength of Pouch-Type Battery Case

Sealing strength of the pouch-type battery case prepared in each of Examples 1 to 4 and Comparative Examples 1 and 2 was measured.

Specifically, the sealing strength was calculated from the maximum value of the tensile strength measured by cutting the sealing part formed in the pouch-type battery case at intervals of 15 mm and then pulling the sealing part in the direction of 180° at a speed of 5 mm/min at room temperature using UTM. The results thereof are presented in Table 1 below.

### Experimental Example 4: Evaluation of Insulation Resistance of Pouch-Type Battery Case

Insulation resistance of the pouch-type battery case prepared in each of Examples 1 to 4 and Comparative Examples 1 and 2 was measured.

Specifically, the insulation resistance was measured by a method of checking the resistance value 5 seconds after 100 V was applied using Resistance Meter (RM3544-01) equipment from HIOKI. The measurement results are shown in Table 1 below.

**[Table 1]**

| | Sealant layer in pouch film laminate | | | | Thicknes s ratio (%) of sealant layer of sealing part | Pouch-type case | |
|---|---|---|---|---|---|---|---|
| | Melt viscosity (Pa·s) | | | MFR (g/10m in) | | Sealing strength (kgf/15 mm) | Insulat ion resistance (Ω) |
| | 170°C | 190°C | 210°C | | | | |
| Example 1 | 3682 | 2602 | 1886 | 6.8 | 83.7 | 9.3 | 1227 |
| Example 2 | 2462 | 1728 | 1215 | 8.5 | 71.3 | 16.3 | 1603 |
| Example 3 | 2007 | 1400 | 1014 | 13.0 | 73.1 | 14.2 | 388 |
| Example 4 | 3264 | 2502 | 1886 | 1.9 | 78.1 | 15.5 | 1910 |
| Comparative Example 1 | 5064 | 3717 | 2840 | 2.3 | 90.0 | 7.2 | 1676 |
| Comparative Example 2 | 1340 | 816 | 421 | 17.9 | 52.5 | 13.0 | 40 |

According to Table 1, in the case of Examples 1 to 4 in which the melt viscosity of the sealant layer measured at 190 °C satisfies 1,000 Pa·s to 3,500 Pa·s, it may be confirmed that the sealing part having a thickness of 54% to 86% of the sealant layer of the sealing part with respect to the thickness of the sealant layer of the pouch film laminate is formed within a sealing time (1.6 seconds), the sealing strength is significantly higher than that of Comparative Example 1, and the insulation resistance is significantly higher than that of Comparative Example 2.

### [Description of Symbols]

- 100:: Pouch-type secondary battery
- 110:: Pouch-type battery case
- 120:: First case
- 122:: Cup part
- 124:: Accommodation part
- 130:: Second case
- 132:: Cup part
- 140:: Bridge portion
- 150:: Sealing part
- 160:: Electrode assembly
- 170:: Electrode tab
- 172:: Positive electrode tab
- 174:: Negative electrode tab

## Claims

1. A pouch film laminate comprising a substrate layer, a gas barrier layer, and a sealant layer which are sequentially laminated,
wherein the sealant layer has a melt viscosity of 1,000 Pa·s to 3,500 Pa·s as measured at 190 °C.

2. The pouch film laminate of claim 1, wherein the sealant layer has a melt viscosity of 1,400 Pa·s to 4,500 Pa·s as measured at 170 °C.

3. The pouch film laminate of claim 1, wherein the sealant layer has a melt viscosity of 500 Pa·s to 2,500 Pa·s as measured at 210 °C.

4. The pouch film laminate of claim 1, wherein the sealant layer has a melt flow rate (MFR) of 1 g/10min to 15 g/10min as measured under the conditions of a temperature of 230 °C and a load of 2.16 kg.

5. The pouch film laminate of claim 1, wherein the sealant layer has a thickness of 30-130 µm.

6. The pouch film laminate of claim 1, wherein the gas barrier layer has a thickness of 40-100 µm.

7. The pouch film laminate of claim 1, wherein the substrate layer has a thickness of 5-100 µm.

8. The pouch film laminate of claim 1, wherein the substrate layer comprises a first substrate layer and a second substrate layer disposed between the first substrate layer and the gas barrier layer, and
the second substrate layer comprises nylon.

9. The pouch film laminate of claim 8, wherein the second substrate layer comprises nylon 6.

10. A pouch-type secondary battery comprising a pouch-type battery case in which an electrode assembly is accommodated,
wherein the pouch-type battery case comprises a pouch film laminate,
the pouch film laminate comprises a substrate layer, a gas barrier layer, and a sealant layer which are sequentially laminated, and
the sealant layer has a melt viscosity of 1,000 Pa·s to 3,500 Pa·s as measured at 190 °C.

11. The pouch-type secondary battery of claim 10, wherein when the pouch-type battery case is sealed for 1.6 seconds at 210 °C and 1.2 MPa, the thickness of the sealant layer of a sealing part formed in the pouch-type battery case is 54% to 86% relative to the thickness of the sealant layer of the pouch film laminate.
